# EUROPEAN PATENT SPECIFICATION

(11) **EP 3 223 158 B1**
(45) Date of publication and mention of the grant of the patent: **22.04.2020**
(21) Application number: 16847617.4
(22) Date of filing: 01.02.2016
(51) Int. Cl.: G06F 11/14, G06F 3/06

(54) **DATA RECOVERY METHOD AND STORAGE SYSTEM**
ATENWIEDERHERSTELLUNGSVERFAHREN UND SPEICHERSYSTEM
PROCÉDÉ DE RÉCUPÉRATION DE DONNÉES ET SYSTÈME DE STOCKAGE

(43) Date of publication of application: 27.09.2017
(73) Proprietor: Huawei Technologies Co., Ltd., Longgang District Shenzhen, Guangdong 518129 (CN)
(72) Inventor: FU, Gaoding, Shenzhen Guangdong 518129 (CN); JIANG, Yong, Shenzhen Guangdong 518129 (CN); MU, Zian, Shenzhen Guangdong 518129 (CN)
(74) Representative: Thun, Clemens
(86) International application number: PCT/CN2016/073038
(87) International publication number: WO 2017/132790

(56) References cited:
- EP-A2- 2 105 835
- CN-A- 101 419 564
- CN-A- 101 520 743
- CN-A- 103 678 039
- US-A1- 2011 066 599
- US-A1- 2011 161 299
- US-A1- 2014 188 811

## Description

### TECHNICAL FIELD

The present invention relates to the field of storage, and in particular, to a data recovery method and a storage system.

### BACKGROUND

With gradual recognition of technologies such as cloud computing and big data by enterprises, increasing enterprises are constructing their own cloud data centers for providing services for users, to seize decisive market opportunities and win the favor of customers. However, a big issue inevitable faced during construction of a data center is how to ensure security and reliability of data of users. A server in the data center often experiences unplanned downtime due to a natural disaster such as a fire, a flood, or an earthquake, resulting service interruption, and also encounters service interruption resulting from a human factor such as a misoperation, a software error, or virus invasion. Once a service is interrupted, an unpredictable loss may be caused to an enterprise.

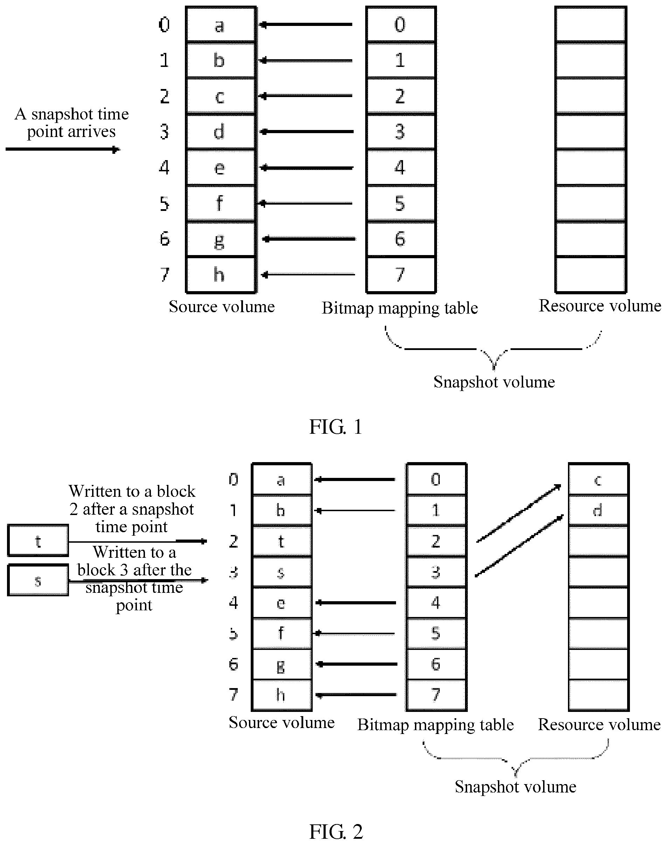

A snapshot technology is proposed to ensure that a service runs smoothly. A snapshot mainly can be used for online data backup and recovery. When an application fault or file damage occurs on a storage device, rapid data recovery can be performed to recover data to a status at a particular snapshot time point. For a conventional storage array snapshot technology, a mapping relationship between original data in a source volume (a backed-up LUN) and a physical address of the original data is recorded by using a bitmap mapping table, as shown in FIG. 1. When a snapshot time point arrives, a storage array creates a snapshot volume in another LUN, the snapshot volume includes a bitmap mapping table and a resource volume, and the bitmap mapping table is used to record a mapping relationship between original data in the source volume and a physical address of the original data. After the source volume is snapshotted, if data in the source volume is modified, modified original data in the source volume is recorded in the resource volume, and a mapping relationship between the physical address of the original data in the bitmap mapping table and an address, in the resource volume, for storing the original data is established. As shown in FIG. 1, during snapshotting, the storage array records, in the bitmap mapping table, physical addresses of a data block 0 to a data block 7 in the source volume. After snapshotting, as shown in FIG. 2, when an original data d in the source volume needs to be updated to s, first the original data d in the source volume is moved to the resource volume, then a mapping relationship between a physical address of the original data in the bitmap mapping table and a physical address, in the resource volume, for storing the original data is established, and then updated data s is written to the source volume. Similarly, when data c in the source volume is updated to t, the original data c may be recorded in the resource volume. When data in the source volume is damaged, recovering to data at a snapshot point may be implemented by means of rolling back snapshot data, that is, an original data block recorded in the resource volume in the snapshot volume is migrated to a corresponding location in the source volume, so that the data in the source volume is recovered to the data at the snapshot time point. As shown in FIG. 2, when data needs to be rolled back to the snapshot time point, because data in other blocks in the source volume does not change, only the original data d and c recorded in the resource volume need to be copied to locations of block 3 and block 2 in the source volume.

For example, US 2011/161299A1 refers to a system and method for using a snapshot as a data source. In some cases, the system stores a snapshot and an associated data structure or index to storage media to create a secondary copy of a volume of data. In some cases, the associated index includes application specific data about a file system or other application that created the data to identify the location of the data. The associated index may include three entries, and may be used to facilitate the recovery of data via the snapshot. The snapshot may be used by ancillary applications to perform various functions, such as content indexing, data classification, deduplication, e-discovery, and other functions.

Further, US 2011/0066599 A1 refers to a method for performing an image level copy of an information store. The method comprises performing a snapshot of an information store that indexes the contents of the information store, retrieving data associated with the contents of the information store from a file allocation table, copying the contents of the information store to a storage device based on the snapshot, and associating the retrieved data with the copied contents to provide file system information for the copied contents.

However, because a human misoperation or virus invasion damages only some files in the source volume, for example, only data in the block 2 is damaged, if the foregoing snapshot data rollback manner is used to recover data, data of all files in the source volume is recovered to the snapshot time point, that is, both the data in the block 2 and data in the block 3 are recovered to the data d and c at the snapshot time point. However, if data that is modified after the snapshot time point is not damaged, the undamaged data does not need to be recovered, that is, the data s that is written to the block 3 after the snapshot point does not need to be recovered. If the existing recovery manner is used, not only recovery of only a damaged file cannot be implemented, but also all data recorded in the resource volume needs to be migrated to the source volume, resulting in low recovery efficiency.

### SUMMARY

The present invention provides a data recovery method and a storage system, so as to recover data of only some files in a source volume.

This problem is solved by the subject matter of the independent claims.
It can be learned from the foregoing technical solutions that, the embodiments of the present invention have the following advantages: if a user needs to perform data recovery on some files whose data is modified or deleted in a source volume used by a production host, the user only needs to select a to-be-recovered file in a server; after obtaining, according to an identifier of the to-be-recovered file, a first physical address of a data block included in the to-be-recovered file, the server sends the first physical address to a storage device; and the storage device searches in a recovery snapshot according to the first physical address of the data block included in the to-be-recovered file, to obtain a modified data block, in the recovery snapshot, that is recorded in a resource volume, and then recovers, in the source volume, the to-be-recovered file according to the modified data block recorded in the resource volume. According to the present invention, specified recovery can be performed on a selected file (for example, some damaged files) that needs to be recovered, without the need to entirely copy all data in a snapshot volume to a source volume. Therefore, an updated file that is not damaged is not overwritten, and efficiency of data recovery can also be greatly improved.

### BRIEF DESCRIPTION OF DRAWINGS

FIG. 1 is a schematic diagram of data recovery according to a snapshot according to the present invention;
FIG. 2 is another schematic diagram of data recovery according to a snapshot according to the present invention;
FIG. 3 is a schematic diagram of a scenario deployment of a data recovery method according to the present invention;
FIG. 4 is a schematic flowchart of an embodiment of a data recovery method according to an example;
FIG. 5 is a schematic flowchart of another embodiment of a data recovery method according to the present invention;
FIG. 6 is another schematic diagram of data recovery according to a snapshot according to the present invention;
FIG. 7 is another schematic diagram of data recovery according to a snapshot according to the present invention;
FIG. 8 is another schematic diagram of data recovery according to a snapshot according to the present invention;
FIG. 9 is another schematic diagram of data recovery according to a snapshot according to the present invention;
FIG. 10 is a schematic structural diagram of a storage device according to the present invention; and
FIG. 11 is a schematic structural diagram of a storage device according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. The scope of protection is defined by the appended claims.

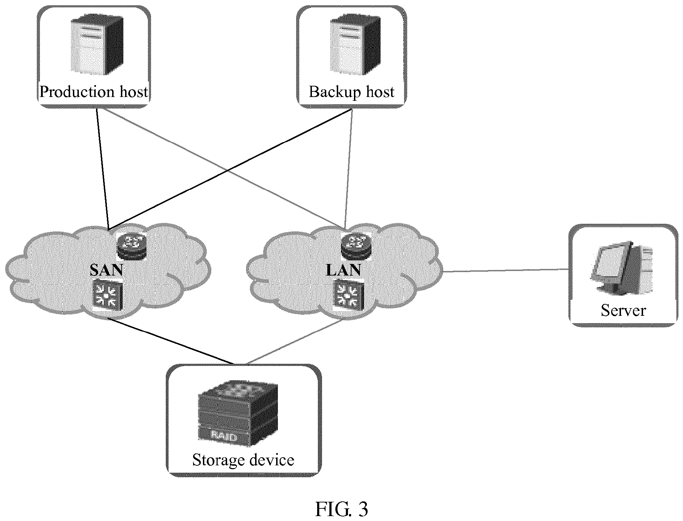

As shown in FIG. 3, FIG. 3 is a possible scenario deployment for implementing a data recovery method of the present invention. Physical entities included in FIG. 3 are mainly hosts, a storage device, and a server. For ease of description, in FIG. 3, related devices are named in conformity with the scenario, but corresponding functions of the devices are not limited, and quantities of the devices are not limited in an actual deployment. FIG. 3 includes a production host (or referred to as a service host) running a service, and a backup host for the production host. When the production host encounters a fault or needs to be maintained, the backup host may be started. FIG. 3 further includes a storage device and a server. The server (for example, a disaster recovery management (Disaster Recovery Management, DRM) server) is mainly responsible for centralized management of data disaster recovery. For example, the server manages all production hosts for which disaster recovery is required and storage arrays/devices used by the production hosts, and may generate, according to a particular time policy (for example, every hour/every day), a snapshot for storage space (that is, a source volume) corresponding to a logical unit number (Logical Unit Number, LUN) used by a production host. In the production host and the backup host in FIG. 3, a service agent needs to be deployed, so that the production host and the backup host have the following function: collecting information about a physical address, in a storage array/device, of a file in the production host. In FIG. 3, the server and the production host/backup host are connected by using a local area network LAN, and communicate by using a representational state transfer (Representational State Transfer, REST) interface. The production host, the backup host, and the storage array/device are connected by using a storage area network SAN, and the production host and the backup host use a storage LUN provided by the storage array/device.

Before data recovery, it is assumed that the server has managed the storage array/device and the service host (for example, the production host and the backup host), and the server has obtained, by using a service agent in the production host, information about files (for example, a data file, a control file, and a log file) in the production host and a source volume that stores the files, and has generated, according to a particular time policy (for example, every hour), a storage snapshot volume for the source volume that stores the files, to complete backup of the files (for example, the data file, the control file, and the log file) in the production host.

It is assumed that the server obtains the snapshot volume by snapshotting the source volume at a first snapshot time point, and the obtained snapshot volume records a first physical address, in the source volume at the first snapshot time point, of each data block included in the source volume. If a data block in the source volume is modified before a next snapshot time point of the first snapshot time point, that is, a second snapshot time point, the modified data block in the source volume is moved by the server to a resource volume for storage, and the server establishes, in the snapshot volume, a correspondence between a first physical address of the modified data block and a second physical address, in the resource volume, of the modified data block.

In the technical solutions of the present invention, after some files in the source volume are deleted or data of some files is modified, the deleted or modified files may be recovered by using data in the snapshot volume.

For ease of understanding, a method for recovering, when some files in a source volume are modified, the modified files by using a snapshot, and a method for recovering, when some files in a source volume are deleted, data of the deleted files by using a snapshot are separately described below.

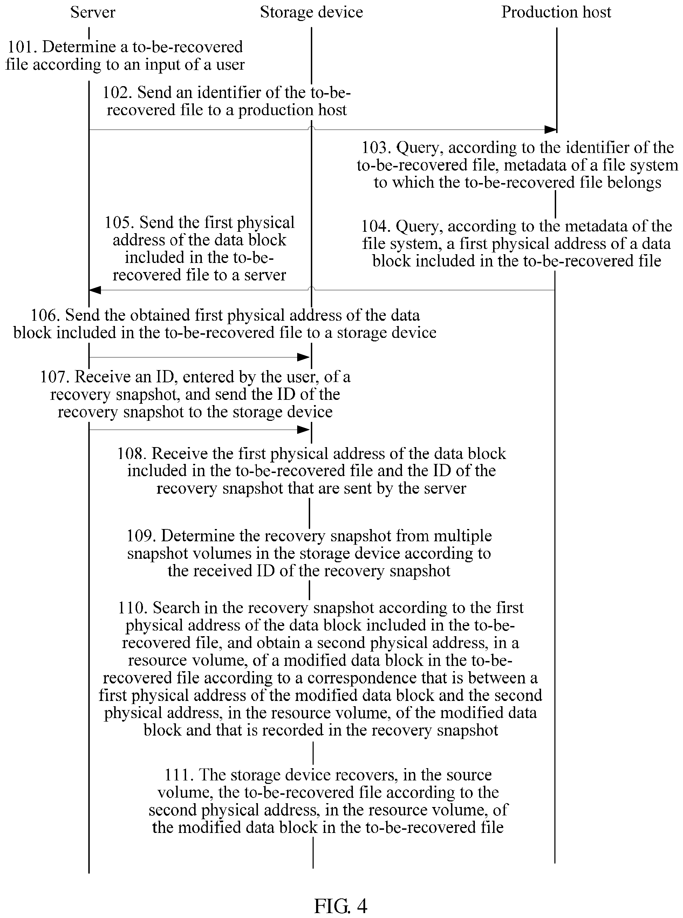

As shown in FIG. 4, FIG. 4 is a schematic flowchart of a method for recovering, when some files in a source volume are modified, data of the modified files by using a snapshot. The recovery method includes the following steps.

101: A server determines a to-be-recovered file according to an input of a user.

In this step, the user needs to log in to the server and select the to-be-recovered file. For example, a file that needs to be recovered is selected according to information (such as file names or paths) about files in a production host that is stored in the server.

102: The server sends an identifier (Identifier, ID) of the to-be-recovered file to a production host.

In this step, the server sends the identifier of the to-be-recovered file to the production host, to obtain a first physical address of a data block included in the to-be-recovered file in the production host. The first physical address is an address of the to-be-recovered file in the source volume. Specifically,
the server delivers the ID of the to-be-recovered file to the production host by using a REST interface, and the production host queries the first physical address of the data block included in the to-be-recovered file by using an agent deployed in the production host, and sends the first physical address to the server. A method for obtaining the first physical address by the production host specifically includes the following steps 103 to 105.

103: The production host queries, according to the identifier of the to-be-recovered file, metadata of a file system to which the to-be-recovered file belongs.

104: The production host queries, according to the metadata of the file system, a first physical address of a data block included in the to-be-recovered file.

105: The production host sends the first physical address of the data block included in the to-be-recovered file to the server.

106: The server sends the obtained first physical address of the data block included in the to-be-recovered file to a storage device.

107: The server receives an ID, entered by the user, of a recovery snapshot, and sends the ID of the recovery snapshot to the storage device.

Specifically, the server sends the first physical address of the data block included in the to-be-recovered file and the ID of the recovery snapshot to the storage device by using a REST interface.

It should be noted that, step 107 may be performed after step 106 is completely performed, or may be performed before step 106 is completely performed. Alternatively, when the first physical address of the data block included in the to-be-recovered file is sent to the storage device, the ID of the recovery snapshot may be sent to the storage device at the same time. A sequence of performing steps 106 and 107 is not limited herein.

In addition, if the server performs snapshotting only once, that is, there is only one snapshot volume in the storage device, step 107 may not be performed.

108: The storage device receives the first physical address of the data block included in the to-be-recovered file and the ID of the recovery snapshot that are sent by the server.

It should be noted that, when the server does not perform step 107, in step 108, the storage device receives only the first physical address, which is sent by the server, of the data block included in the to-be-recovered file.

109: The storage device determines the recovery snapshot from multiple snapshot volumes in the storage device according to the received ID of the recovery snapshot.

Similarly, when the server does not perform step 107, the step 109 may not be performed. Because there is only one snapshot volume in the storage device, it may be determined that the only snapshot volume in the storage device is the recovery snapshot.

110: The storage device searches in the recovery snapshot according to the first physical address of the data block included in the to-be-recovered file, and obtains a second physical address, in a resource volume, of a modified data block in the to-be-recovered file according to a correspondence that is between a first physical address of the modified data block and the second physical address, in the resource volume, of the modified data block and that is recorded in the recovery snapshot, where the recovery snapshot is a snapshot volume used to recover the to-be-recovered file.

111: The storage device recovers, in the source volume, the to-be-recovered file according to the second physical address, in the resource volume, of the modified data block in the to-be-recovered file.

Optionally, the recovering, in the source volume, data of the to-be-recovered file according to the second physical address, in the resource volume, of the modified data block in the to-be-recovered file specifically includes:
finding, in the resource volume, the modified data block according to the second physical address, in the resource volume, of the modified data block in the to-be-recovered file; and
recovering, in the source volume, data of the to-be-recovered file by using the modified data block.

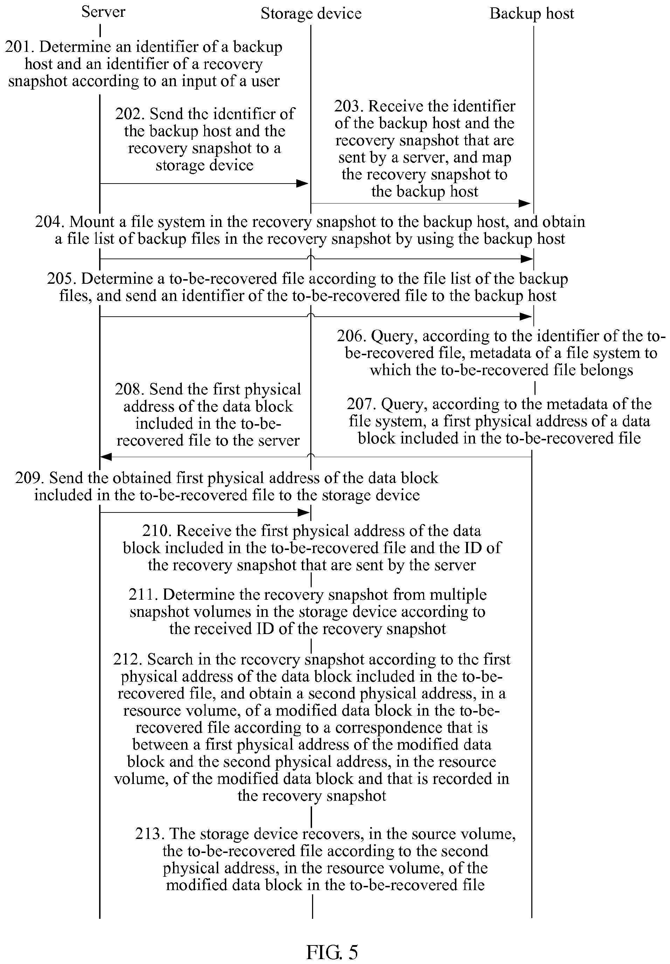

As shown in FIG. 5, FIG. 5 is a flowchart of a data recovery method in a scenario in which some files in a source volume used by a production host are deleted. The method includes the following steps.

201: A server determines an identifier of a backup host and an identifier of a recovery snapshot according to an input of a user.

In this step, the user needs to log in to the server, and selects the ID of the backup host and a recovery snapshot that is used to recover data of a to-be-recovered file.

It should be noted that, after a file in the source volume is deleted, in a file system of the production host, a first physical address of the deleted file also does not exist, but when the server snapshots the source volume, a file system, which includes first physical addresses of files, in the source volume is also stored in a snapshot volume. Therefore, to obtain a physical address of the to-be-recovered deleted file, the identifier of the backup host and the identifier of the recovery snapshot need to be entered by the user, so as to obtain the first physical address of the deleted to-be-recovered file by using the backup host and the recovery snapshot.

202: The server sends the identifier of the backup host and the recovery snapshot to a storage device.

203: The storage device receives the identifier of the backup host and the recovery snapshot that are sent by the server, and maps the recovery snapshot to the backup host.

The storage device determines the backup host according to the identifier of the backup host, and maps the received recovery snapshot to the backup host, so that the backup host reads/writes the recovery snapshot.

204: The server mounts a file system in the recovery snapshot to the backup host, and obtains a file list of backup files in the recovery snapshot by using the backup host.

Specifically, the server notifies, by using a REST interface, that the file system is to be deployed in the backup host, and the backup host mounts the file system in the recovery snapshot to a specified mount point (for example, a D or E partition in a Windows operating system, or /opt/data1 or /opt/data2 in a Linux operating system) in the backup host by using an agent deployed in the backup host, so as to obtain the file list of the backup files in the recovery snapshot.

205: The server determines a to-be-recovered file from the file list of the backup files according to an input of the user, and sends an identifier of the to-be-recovered file to the backup host.

In this step, the user needs to log in to the server, and selects the to-be-recovered file from the file list of the backup files. The server sends the identifier of the determined to-be-recovered file to the backup host by using a REST interface. The backup host queries, by using an agent deployed in the backup host, a first physical address of a data block included in the to-be-recovered file, and sends the first physical address to the server. A method for obtaining the first physical address by the backup host specifically includes the following steps 206 to 208.

206: The backup host queries, according to the identifier of the to-be-recovered file, metadata of a file system to which the to-be-recovered file belongs.

207: The backup host queries, according to the metadata of the file system, a first physical address of a data block included in the to-be-recovered file.

208: The backup host sends the first physical address of the data block included in the to-be-recovered file to the server.

Steps 209 to 213 describe recovery of data of the to-be-recovered file by the storage device after the storage device receives the first physical address of the data block included in the to-be-recovered file. A method for recovering data of the file is the same as the method for recovering data of a modified file, that is, steps 106, and 108 to 111, described in FIG. 4, and details are not described herein again.

Optionally, after recovery of data of the to-be-recovered file is completed in step 214, the server may instruct, by using a REST interface, the backup host to unmount the file system in the recovery snapshot from the backup host, and demap the recovery snapshot from the backup host, to reduce occupation of resources in the backup host, and prevent a misoperation from damaging data in the recovery snapshot.

In this embodiment of the present invention, if a user needs to perform data recovery on some files whose data is modified or deleted in a source volume used by a production host, the user only needs to select a to-be-recovered file in a server; after obtaining, according to an identifier of the to-be-recovered file, a first physical address of a data block included in the to-be-recovered file, the server sends the first physical address to a storage device; and the storage device searches in a recovery snapshot according to the first physical address of the data block included in the to-be-recovered file, to obtain a modified data block, in the recovery snapshot, that is recorded in a resource volume, and then recovers, in the source volume, data of the to-be-recovered file according to the modified data block recorded in the resource volume. According to the present invention, specified recovery can be performed on a selected file (for example, some damaged files) that needs to be recovered, without the need to entirely copy all data in a snapshot volume to a source volume. Therefore, an updated file that is not damaged is not overwritten, and efficiency of data recovery can also be greatly improved.

For ease of understanding, the data recovery method in this embodiment of the present invention is specifically described below by using a specific application scenario.

In this scenario, descriptions are provided by using an example in which, when some files in a source volume are modified, data of the modified files are recovered by using a snapshot, and for a scenario in which some files are deleted, refer to this description correspondingly.

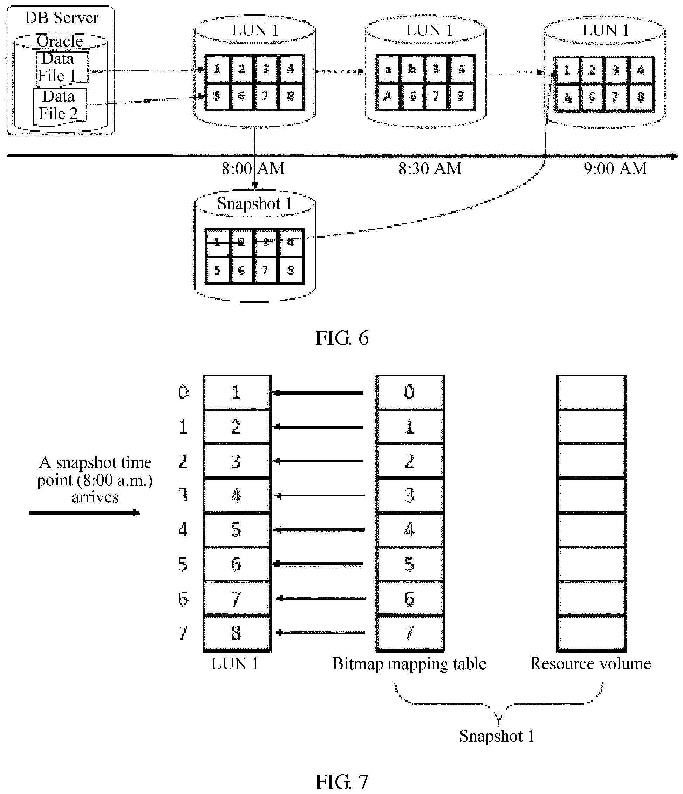

As shown in FIG. 6, an Oracle (Oracle is a relational database management system of Oracle Corporation, and is used only as an example of an application scenario for description herein) database runs on a DB Server (English: Database Server). In the figure, there are two data files: DataFile1 and DataFile2, in the database, and the data files are stored in a LUN 1 for storage, that is, a source volume. It is assumed that a starting physical address of data blocks in the LUN 1 that correspond to DataFile1 is 0, and an ending physical address is 3, and stored data is 1, 2, 3, and 4 respectively; and a starting physical address of data blocks in the LUN 1 that correspond to DataFile2 is 4, and an ending physical address is 7, and stored data is 5, 6, 7, and 8 respectively. A process of data damage and recovery is shown in the figure, and a specific process with reference to the present invention is as follows.

For example, the server creates a storage snapshot Snapshot1 for the LUN 1 at 8:00 a.m. As shown in FIG. 7, when the snapshot time point 8:00 arrives, Snapshot1 is created for the data, in the LUN 1, that corresponds to DataFile1 and DataFile2.

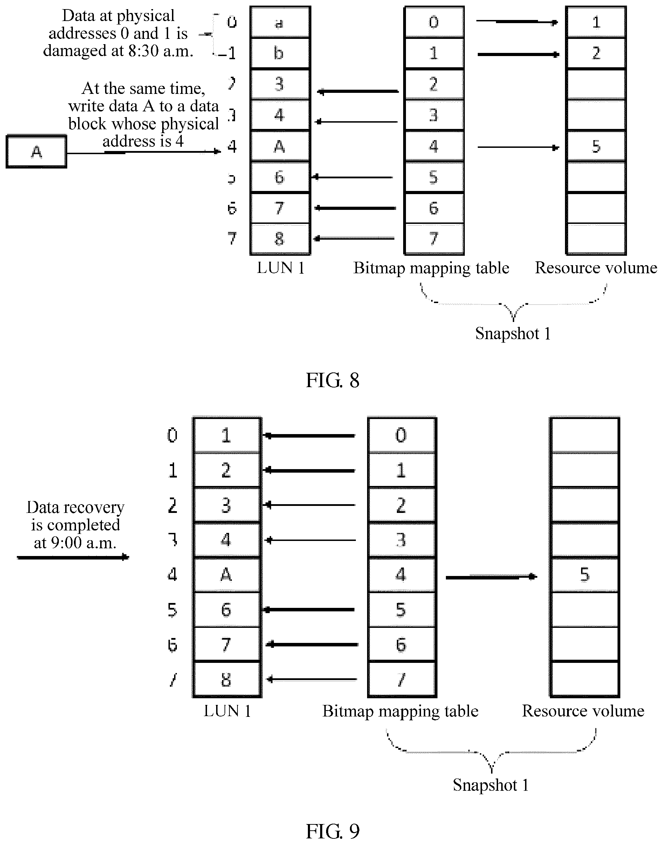

Referring to FIG. 6 and FIG. 8, at 8:30 a.m., DataFile1 is artificially damaged. For example, the data 1 and 2 whose physical addresses of corresponding data blocks in the LUN 1 are 0 and 1 are modified (for example, the data 1 and 2 in FIG. 6 and FIG. 8 are modified as a and b). Data in DataFile2 continues to be updated, for example, data at the physical address 4 in the source volume in FIG. 8 is updated to A.

If the data in DataFile2 that continues to be updated is useful data, data recovery needs to be performed only on damaged DataFile1, and by means of the technical solutions of the present invention, DataFile1 is selected for data recovery. FIG. 6 shows a status at 9:00 a.m. after data recovery is completed. A specific recovery process is as follows: Snapshot1 is selected as a recovery snapshot used to recover DataFile1, and the server determines the to-be-recovered file DataFile1 according to an input of a user, to obtain physical addresses (physical addresses corresponding to the data 1 to 4 in FIG. 6, where these physical addresses are 0 to 3 in FIG. 8) of the data blocks included in DataFile1. After obtaining the physical addresses of the data blocks included in DataFile1, the server sends the physical addresses of the data blocks included in DataFile1 and an ID of Snapshot1 to a storage device. After receiving the physical addresses of the data blocks included in DataFile1 and the ID of Snapshot1 that are sent by the server, the storage device first determines the recovery snapshot Snapshot1 corresponding to the ID of Snapshot1, and then obtains physical addresses, in a resource volume, of modified data blocks in the to-be-recovered file DataFile1 according to correspondences that are between physical addresses (the physical addresses 0 and 1 in a bitmap mapping table shown in FIG. 8) of the modified data blocks and the physical addresses (physical addresses of the data 1 and 2 in the resource volume shown in FIG. 8), in the resource volume, of the modified data blocks and that are recorded in Snapshot1. Data blocks corresponding to the data 1 and 2 are found in the resource volume according to the physical addresses, in the resource volume, of the data 1 and 2 shown in FIG. 8, and the data 1 and 2 are copied, in the source volume, to data blocks of DataFile1 that correspond to the data 1 and 2 that are modified in the LUN 1. As shown in FIG. 9, at 9:00 a.m., the data 1 and 2 in the resource volume have been copied to the data blocks, whose data is modified in the LUN 1, of DataFile1. Therefore, by means of the data recovery method, data recovery can be performed on modified DataFile1, and data that is written to DataFile2 after the snapshot time point is not affected, whereas data of both DataFile1 and DataFile2 are recovered to the source volume in an entirely copying manner in the prior art. Therefore, in this case, when data recovery is performed by using the data recovery method provided in the present invention, there is no need to entirely copy all data in a snapshot volume to a source volume. Therefore, a file that is not damaged is not overwritten, and efficiency of data recovery can also be greatly improved.

For a scenario in which some files in a source volume are deleted, also refer to the foregoing example. For example, if the foregoing DataFile1 is deleted, the data 1 to 4 whose physical addresses of corresponding data blocks in the LUN 1 are 0 to 3 are deleted. Therefore, when data recovery is performed for DataFile1, the data 1 to 4 in the source volume need to be recovered. Different from the foregoing example, because a file in DataFile1 is deleted, to obtain a physical address of the deleted file in DataFile1, a user needs to enter an identifier of a backup host and an identifier of a recovery snapshot, so that a physical address of the deleted to-be-recovered file DataFile1 is obtained by using the backup host and the recovery snapshot. For a subsequent data recovery process, refer to the foregoing example, and details are not described herein again.

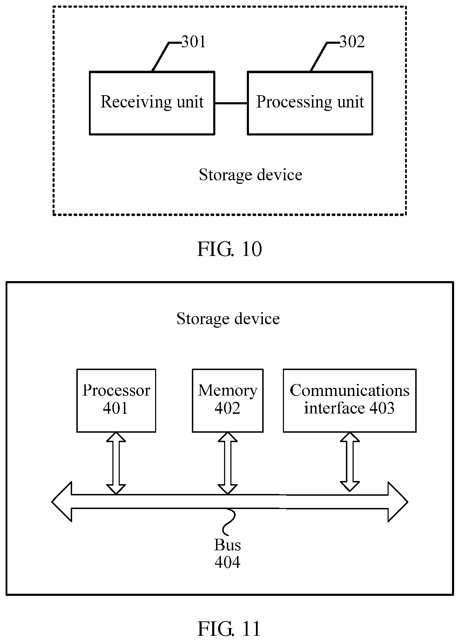

The data recovery method provided in the present invention is described above. A structure of a related apparatus involved in the present invention is described below from a perspective of an apparatus. Referring to FIG. 10, a storage device provided in the present invention includes:
a receiving unit 301, configured to receive a first physical address that is of a data block included in a to-be-recovered file and that is sent by a server, where a manner in which the server obtains the first physical address, in a source volume, of the to-be-recovered file is the same as that in the method embodiment, and details are not described herein again; and
a processing unit 302, configured to: search in a recovery snapshot according to the first physical address of the data block included in the to-be-recovered file, and obtain a second physical address, in a resource volume, of a modified data block in the to-be-recovered file according to a correspondence that is between a first physical address of the modified data block and the second physical address, in the resource volume, of the modified data block and that is recorded in the recovery snapshot, where the recovery snapshot is a snapshot volume used to recover the to-be-recovered file; and
recover, in the source volume, data of the to-be-recovered file according to the second physical address, in the resource volume, of the modified data block in the to-be-recovered file.

Optionally, the storage device includes multiple snapshot volumes obtained by means of snapshotting at multiple snapshot time points. When the storage device includes multiple snapshot volumes,
the receiving unit 301 is further configured to receive an identifier that is of the recovery snapshot and that is sent by the server; and
the processing unit 302 is further configured to determine the recovery snapshot from the multiple snapshot volumes according to the identifier of the recovery snapshot.

Optionally, when the to-be-recovered file is a deleted file, the receiving unit 301 is further configured to receive an identifier of a backup host that is sent by the server; and
the processing unit 302 is further configured to map the recovery snapshot to the backup host, so that the backup host obtains, according to the recovery snapshot, the first physical address of the data block included in the to-be-recovered file, and sends the first physical address of the data block included in the to-be-recovered file to the server.

Optionally, that the processing unit 302 is configured to recover, in the source volume, data of the to-be-recovered file according to the second physical address, in the resource volume, of the modified data block in the to-be-recovered file is specifically:
the processing unit 302 is configured to: find, in the resource volume, the modified data block according to the second physical address, in the resource volume, of the modified data block in the to-be-recovered file; and then recover, in the source volume, data of the to-be-recovered file by using the modified data block.

A specific structure of the storage device is described from a perspective of a functional unit in the example shown in FIG. 10. The specific structure of the storage device is described below from a perspective of hardware with reference to an example shown in FIG. 11.

As shown in FIG. 11, a structure of the storage device provided in the present invention includes a processor 401 and a memory 402, and may further include a bus 403 and a communications interface 404.

Communication connections between the processor 401, the memory 402, and the communications interface 403 may be implemented by using the bus 404, or communication may be implemented by means of wireless transmission or in another manner.

The memory 402 may include a volatile memory (English: volatile memory), for example, a random-access memory (English: random-access memory, RAM for short). The memory 402 may also include a non-volatile memory (English: non-volatile memory), for example, a read-only memory (English: read-only memory, ROM for short), a flash memory (English: flash memory), a hard disk drive (English: hard disk drive, HDD for short) or a solid-state drive (English: solid-state drive, SSD for short). The memory 402 may also include a combination of the foregoing types of memories. Program code for implementing the present invention may be stored in the memory 402, and executed by the processor 401.

The memory 402 stores the following elements, executable modules, or data structures, or a subset thereof, or an extended set thereof:
operation instructions, including various operation instructions, used to implement various operations; and
an operating system, including various system programs, used to implement various fundamental services and process hardware-based tasks.

The storage device involved in this example of the present invention may have more or fewer components than those shown in FIG. 11. Two or more components may be combined, or configuration or setting of the components may be different, and the components may be implemented in hardware, software, or a combination of hardware and software that includes one or more signal processing and/or application-specific integrated circuits.

In this example, the processor 401 is configured to perform steps 108 to 111 in FIG. 4.

For understanding of related descriptions of the foregoing apparatus, refer to corresponding related descriptions and effects in the method embodiment section, and details are not described herein again.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In the several examples provided in this application, it should be understood that the disclosed system, and method may be implemented in other manners. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the examples .

In addition, functional units in the examples may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the examples of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing examples are merely intended for describing the technical solutions of the present invention, but not for limiting the present invention as described in the appended claims.

## Claims

1. A data recovery method performed by a system comprising a storage device, a server and a backup host, wherein the storage device comprises a source volume, wherein the source volume comprises multiple files each containing multiple data blocks, wherein the method comprises:
**a.)** repeatedly snapshotting, by the storage device, at different snapshot time points, the source volume, each snapshotting resulting in the creation of a new snapshot volume comprising a bitmap mapping table, a resource volume and a file system of the multiple files, wherein the creation encompasses the recording for each of the data blocks comprised in the source volume, a first physical address corresponding to the data block in a bitmap mapping table,
**b.)** if-data of a data block in the source volume are to be deleted:
**b1.)** copying, by the storage device, all data within the data block to a corresponding data block in the resource volume of the latest snapshot volume for storage,
**b2.)** recording, by the storage device, a correspondence in the bitmap mapping table of the latest snapshot volume between the first physical address of the data block whose data are to be deleted and a second physical address of the data block in the resource volume of the latest snapshot volume,
**b3.)** deleting, by the storage device, all data in the data block of the source volume whose data are to be deleted,
wherein the method is **characterized by** additionally containing the following method steps:
**c.)** determining, by the server, an identifier of the backup host and an identifier of a snapshot volume among the multiple snapshot volumes according to an input of a user (step 201);
**d.)** sending, by the server, the determined identifier of the backup host and determined identifier of the snapshot volume to the storage device (step 202);
**e.)** receiving, by the storage device, the identifier of the backup host and the identifier of the snapshot volume from the server, and map the snapshot volume to the backup host (step 203);
**f.)** notifying, by the server, by using a Representational State Transfer, REST, interface, the backup host that the file system contained in the snapshot volume corresponding to the identifier is to be mounted on a specified mount point in the backup host by using an agent deployed in the backup host, and mounting, by the backup host, the file system of the identified snapshot volume at the indicated mount position by using the agent deployed in the backup host, and determining, by the backup host, based on the mounted file system a file list of files in the snapshot volume (step 204);
**g.)** sending, by the backup host, the file list to the server;
**h.)** determining, by the server, a to-be recovered file from the file list according to an input of the user (step 205);
**i.)** sending, by the server, an identifier of the to-be-recovered file to the backup host (step 205);
**j.)** determining, by the backup host, according to the identifier of the to-be-recovered file, metadata of the file system to which the to-be recovered file belongs, wherein the file system to which the to-be recovered file belongs is the file system mounted at the mount position in step **f.)** (step 206);
**k.)** determining, by the backup host, according to the metadata of the file system, a physical address of a first data block of the file in the source volume, the first data block being a data block deleted from the source volume (step 207) ;
**l.)** receiving, by the server, the physical address of the first data block from the backup host (step 208);
**m.)** sending, by the server, the physical address of the first data block and the identifier of the snapshot volume to the storage device (step 209);
**n.)** receiving, by the storage device, the physical address of the first data block and the identifier of the snapshot volume from the server (step 210);
**o.)** determining, by the storage device, the snapshot volume according to the received identifier among the multiple snapshot volumes (step 211);
**p.)** searching, by the storage device, in the bitmap mapping table in the determined snapshot volume determined in step **o.)** based on the physical address of the first data block for a physical address of a data block in the resource volume of the determined snapshot volume and finding, by the storage device, the physical address of the data block in the resource volume in the bitmap mapping table (step 212);
**q.)** finding, by the storage device, in the resource volume of the determined snapshot volume determined in step **o.),** the data block based on the found physical address, and copying, by the storage device, into the source volume all data of the found data block into the first data block of the source volume whose data were deleted, thereby recovering the first data block of the to-be recovered file whose data were deleted (step 213).

2. A storage system comprising a storage device, a server and a backup host, wherein the system is configured to perform the method according to claim 1.

## Patentansprüche

1. Datenwiederherstellungsverfahren, das durch ein System durchgeführt wird, das eine Speichereinrichtung, einen Server und einen Backup-Host umfasst, wobei die Speichereinrichtung ein Quellvolumen umfasst, wobei das Quellvolumen mehrere Dateien umfasst, die jeweils mehrere Datenblöcke enthalten, wobei das Verfahren Folgendes umfasst:
**a.)** wiederholtes "Snapshotting", durch die Speichereinrichtung, des Quellvolumens zu unterschiedlichen "Snapshot"-Zeitpunkten, wobei jedes "Snapshotting" in der Erzeugung eines neuen "Snapshot"-Volumens resultiert, das eine Bitmap-Abbildungstabelle, ein Ressourcenvolumen und ein Dateisystem der mehreren Dateien umfasst, wobei das Erzeugen das Aufzeichnen einer ersten physischen Adresse, die dem Datenblock in einer Bitmap-Abbildungstabelle entspricht, für jeden der im Quellvolumen enthaltenen Datenblöcke einschließt,
**b.)** falls Daten eines Datenblocks im Quellvolumen zu löschen sind:
**b1.)** Kopieren, durch die Speichereinrichtung, aller Daten im Datenblock zu einem entsprechenden Datenblock im Ressourcenvolumen des neuesten "Snapshot"-Volumens zur Speicherung,
**b2.)** Aufzeichnen, durch die Speichereinrichtung, einer Korrespondenz in der Bitmap-Abbildungstabelle des neuesten "Snapshot"-Volumens zwischen der ersten physischen Adresse des Datenblocks, dessen Daten zu löschen sind, und einer zweiten physischen Adresse des Datenblocks im Ressourcenvolumen des neuesten "Snapshot"-Volumens,
**b3.)** Löschen, durch die Speichereinrichtung, aller Daten im Datenblock des Quellvolumens, dessen Daten zu löschen sind,
wobei das Verfahren **dadurch gekennzeichnet ist, dass** es zusätzlich die folgenden Verfahrensschritte enthält:
**c.)** Bestimmen, durch den Server, einer Kennung des Backup-Hosts und einer Kennung eines "Snapshot"-Volumens unter den mehreren "Snapshot"-Volumen gemäß einer Eingabe eines Benutzers (Schritt 201);
**d.)** Senden, durch den Server, der bestimmten Kennung des Backup-Hosts und der bestimmten Kennung des "Snapshot"-Volumens zur Speichereinrichtung (Schritt 202);
**e.)** Empfangen, durch die Speichereinrichtung, der Kennung des Backup-Hosts und der Kennung des "Snapshot"-Volumens vom Server und Abbilden des "Snapshot"-Volumens zum Backup-Host (Schritt 203);
**f.)** Benachrichtigen, durch den Server, unter Verwendung einer "Representational State Transfer"- bzw. REST-Schnittstelle, des Backup-Hosts, dass das Dateisystem, das in dem der Kennung entsprechenden "Snapshot"-Volumen enthalten ist, unter Verwendung eines Agenten, der im Backup-Host eingesetzt wird, an einem spezifizierten "Mount"-Punkt im Backup-Host zu mounten ist, und Mounten, durch den Backup-Host, des Dateisystems des identifizierten "Snapshot"-Volumens an der angegebenen "Mount"-Position unter Verwendung des Agenten, der im Backup-Host eingesetzt wird, und Bestimmen, durch den Backup-Host, einer Dateiliste mit Dateien im "Snapshot"-Volumen basierend auf dem gemounteten Dateisystem (Schritt 204);
**g.)** Senden, durch den Backup-Host, der Dateiliste zum Server;
**h.)** Bestimmen, durch den Server, einer wiederherzustellenden Datei aus der Dateiliste gemäß einer Eingabe des Benutzers (Schritt 205);
**i.)** Senden, durch den Server, einer Kennung der wiederherzustellenden Datei zum Backup-Host (Schritt 205);
**j.)** Bestimmen, durch den Backup-Host, von Metadaten des Dateisystems, zu dem die wiederherzustellende Datei gehört, gemäß der Kennung der wiederherzustellenden Datei, wobei das Dateisystem, zu dem die wiederherzustellende Datei gehört, das Dateisystem ist, das in Schritt **f.)** an der "Mount"-Position gemountet wird (Schritt 206);
**k.)** Bestimmen, durch den Backup-Host, einer physischen Adresse eines ersten Datenblocks der Datei im Quellvolumen gemäß den Metadaten des Dateisystems, wobei der erste Datenblock ein aus dem Quellvolumen gelöschter Datenblock ist (Schritt 207);
**l.)** Empfangen, durch den Server, der physischen Adresse des ersten Datenblocks vom Backup-Host (Schritt 208);
**m.)** Senden, durch den Server, der physischen Adresse des ersten Datenblocks und der Kennung des "Snapshot"-Volumens zur Speichereinrichtung (Schritt 209);
**n.)** Empfangen, durch die Speichereinrichtung, der physischen Adresse des ersten Datenblocks und der Kennung des "Snapshot"-Volumens vom Server (Schritt 210);
**o.)** Bestimmen, durch die Speichereinrichtung, des "Snapshot"-Volumens gemäß der empfangenen Kennung unter den mehreren "Snapshot"-Volumen (Schritt 211);
**p.)** Suchen, durch die Speichereinrichtung, in der Bitmap-Abbildungstabelle im bestimmten "Snapshot"-Volumen, das in Schritt **o.)** bestimmt wird, basierend auf der physischen Adresse des ersten Datenblocks, nach einer physischen Adresse eines Datenblocks im Ressourcenvolumen des bestimmten "Snapshot"-Volumens und Finden, durch die Speichereinrichtung, der physischen Adresse des Datenblocks im Ressourcenvolumen in der Bitmap-Abbildungstabelle (Schritt 212);
**q.)** Finden, durch die Speichereinrichtung, des Datenblocks basierend auf der gefundenen physischen Adresse im Ressourcenvolumen des bestimmten "Snapshot"-Volumens, das in Schritt **o.)** bestimmt wird, und Kopieren, durch die Speichereinrichtung, in das Quellvolumen, aller Daten des gefundenen Datenblocks in den ersten Datenblock des Quellvolumens, dessen Daten gelöscht wurden, wodurch der erste Datenblock der wiederherzustellenden Datei, dessen Daten gelöscht wurden, wiederhergestellt wird (Schritt 213).

2. Speichersystem, das eine Speichereinrichtung, einen Server und einen Backup-Host umfasst, wobei das System dazu ausgelegt ist, das Verfahren nach Anspruch 1 durchzuführen.

## Revendications

1. Procédé de récupération de données réalisé par un système comprenant un dispositif de stockage, un serveur et un hôte de sauvegarde, le dispositif de stockage comprenant un volume source, le volume source comprenant de multiples fichiers contenant chacun de multiples blocs de données, le procédé comprenant :
a.) la réalisation d'instantanés répétés, par le dispositif de stockage, à différents points temporels d'instantanés, du volume source, chaque instantané ayant pour résultat la création d'un nouveau volume d'instantanés comprenant une table de correspondance matricielle, un volume de ressources et un système de fichiers des multiples fichiers, la création englobant l'enregistrement, pour chacun des blocs de données compris dans le volume source, d'une première adresse physique correspondant au bloc de données dans une table de correspondance matricielle,
b.) si les données d'un bloc de données dans le volume source doivent être supprimées :
b1.) la copie, par le dispositif de stockage, de toutes les données du bloc de données dans un bloc de données correspondant du volume source du dernier volume d'instantanés pour le stockage,
b2.) l'enregistrement, par le dispositif de stockage, d'une correspondance dans la table de correspondance matricielle du dernier volume d'instantanés entre la première adresse physique du bloc de données dont les données doivent être supprimées et une deuxième adresse physique du bloc de données dans le volume de ressources du dernier volume d'instantanés,
b3.) la suppression, par le dispositif de stockage, de toutes les données dans le bloc de données du volume source dont les données doivent être supprimées,
le procédé étant **caractérisée par le fait qu'**il contient en outre les étapes de procédé suivantes :
c.) la détermination, par le serveur, d'un identifiant de l'hôte de sauvegarde et d'un identifiant d'un volume d'instantanés parmi les multiples volumes d'instantanés en fonction d'une entrée d'un utilisateur (étape 201) ;
d.) l'envoi, par le serveur, de l'identifiant déterminé de l'hôte de sauvegarde et de l'identifiant déterminé du volume d'instantanés au dispositif de stockage (étape 202) ;
e.) la réception, par le dispositif de stockage, de l'identifiant de l'hôte de sauvegarde et de l'identifiant du volume d'instantanés en provenance du serveur, et la mise en correspondance du volume d'instantanés avec l'hôte de sauvegarde (étape 203) ;
f.) la notification, par le serveur, en utilisant une interface de transfert d'état représentationnel, REST, à l'hôte de sauvegarde que le système de fichiers contenu dans le volume d'instantanés correspondant à l'identifiant doit être monté sur un point de montage spécifié dans l'hôte de sauvegarde en utilisant un agent déployé dans l'hôte de sauvegarde, et le montage, par l'hôte de sauvegarde, du système de fichiers du volume d'instantanés identifié à la position de montage indiquée en utilisant l'agent déployé dans l'hôte de sauvegarde, et la détermination, par l'hôte de sauvegarde, sur la base du système de fichiers monté, d'une liste de fichiers dans le volume d'instantanés (étape 204) ;
g.) l'envoi, par l'hôte de sauvegarde, de la liste de fichiers au serveur ;
h.) la détermination, par le serveur, d'un fichier à récupérer à partir de la liste de fichiers en fonction d'une entrée de l'utilisateur (étape 205) ;
i.) l'envoi, par le serveur, d'un identifiant du fichier à récupérer à l'hôte de sauvegarde (étape 205) ;
j.) la détermination, par l'hôte de sauvegarde, en fonction de l'identifiant du fichier à récupérer, des métadonnées du système de fichiers auquel le fichier à récupérer appartient, le système de fichiers auquel le fichier à récupérer appartient étant le système de fichiers monté à la position de montage à l'étape f.) (étape 206) ;
k.) la détermination, par l'hôte de sauvegarde, en fonction des métadonnées du système de fichiers, d'une adresse physique d'un premier bloc de données du fichier dans le volume source, le premier bloc de données étant un bloc de données supprimé du volume source (étape 207) ;
l.) la réception, par le serveur, de l'adresse physique du premier bloc de données en provenance de l'hôte de sauvegarde (étape 208) ;
m.) l'envoi, par le serveur, de l'adresse physique du premier bloc de données et de l'identifiant du volume d'instantanés au dispositif de stockage (étape 209) ;
n.) la réception, par le dispositif de stockage, de l'adresse physique du premier bloc de données et de l'identifiant du volume d'instantanés en provenance du serveur (étape 210) ;
o.) la détermination, par le dispositif de stockage, du volume d'instantanés en fonction de l'identifiant reçu parmi les multiples volumes d'instantanés (étape 211) ;
p.) la recherche, par le dispositif de stockage, dans la table de correspondance matricielle du volume d'instantanés déterminé déterminé à l'étape o.) sur la base de l'adresse physique du premier bloc de données pour une adresse physique d'un bloc de données dans le volume de ressources du volume d'instantanés déterminé et le fait de trouver, par le dispositif de stockage, l'adresse physique du bloc de données dans le volume de ressources dans la table de correspondance matricielle (étape 212) ;
q.) le fait de trouver, par le dispositif de stockage, dans le volume de ressources du volume d'instantanés déterminé déterminé à l'étape o.), le bloc de données basé sur l'adresse physique trouvée, et la copie, par le dispositif de stockage, dans le volume source de toutes les données du bloc de données trouvé dans le premier bloc de données du volume source dont les données ont été supprimées, récupérant ainsi le premier bloc de données du fichier à récupérer dont les données ont été supprimées (étape 213).

2. Système de stockage comprenant un dispositif de stockage, un serveur et un hôte de sauvegarde, le système étant configuré pour réaliser le procédé selon la revendication 1.
